(19) Europäisches Patentamt
European Patent Office
Office européen des brevets

(11) Veröffentlichungsnummer: **0 004 284**
**B1**

(12) # EUROPÄISCHE PATENTSCHRIFT

(45) Veröffentlichungstag der Patentschrift: **15.07.81**

(21) Anmeldenummer: **79100493.0**

(22) Anmeldetag: **20.02.79**

(51) Int. Cl.³: **C 08 F 255/02,** C 08 F 263/02 // (C08F255/02, 212/04, 220/42, 216/00),(C08F263/02, 212/04, 220/42, 216/00)

(54) **Allylverbindungen enthaltende Pfropfcopolymerisate und Verfahren zu ihrer Herstellung.**

(30) Priorität: **11.03.78 DE 2810633**

(43) Veröffentlichungstag der Anmeldung: **03.10.79 Patentblatt 79/20**

(45) Bekanntmachung des Hinweises auf die Patenterteilung: **15.07.81 Patentblatt 81/28**

(84) Benannte Vertragsstaaten: **DE FR GB IT NL**

(56) Entgegenhaltungen:
**FR-A-2 179 779**
**FR-A-2 179 780**

(73) Patentinhaber: **BAYER AG, Zentralbereich Patente, Marken und Lizenzen, D-5090 Leverkusen 1, Bayerwerk (DE)**

(72) Erfinder: **Steffen, Ulrich, Dr., Im Daubenthal 8, D-4047 Dormagen (DE)**
Erfinder: **Alberts, Heinrich, Dr., Morgengraben 16, D-5000 Köln 80 (DE)**
Erfinder: **Prinz, Richard, Dr., Bamberger Strasse 12, D-5090 Leverkusen-1 (DE)**

**EP 0 004 284 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

# Allylverbindungen enthaltende Pfropfcopolymerisate und Verfahren zu ihrer Herstellung.

Die Erfindung betrifft Pfropfcopolymerisate aus Ethylenco-polymerisaten als Pfropfsubstrat und einem Gemisch von Acrylnitril, Monovinylaromaten und einer Allylverbindung als Pfropfmonomere sowie ein Verfahren zu ihrer Herstellung.

Die radikalische Pfropfung von Styrol-Acrylnitrilgemischen auf Ethylencopolymerisate führt bekanntlich zu unverträglichen und inhomogenen Pfropfcopolymerisaten mit schlechten mechanischen Festigkeitswerten. In solchen Produkten besteht die Harzphase zu einem grossen Teil aus freiem Styrol-Acrylnitril-Copolymerisat (J.L. Locatelli, G. Riess, Angew. Makromolekulare Chem. 32 (1973) 117; britisches Patent 917 498).

Die Pfropfausbeuten und parallel dazu die mechanischen Eigenschaften lassen sich durch zusätzlichen Einsatz bestimmter Comonomerer wie α-Olefine (DE-OS 2 215 588), Vinylchlorid (DE-OS 2 509 403) und Acrylamid (DE-OS 26 56 228) deutlich verbessern.

Diesen positiven Eigenschaften stehen auch einige Nachteile gegenüber: die α-Olefine erniedrigen die Molgewichte der Harzphase und werden während der Polymerisation nicht immer vollständig verbraucht. Die Verwendung von Vinylchlorid als Comonomeres wird aufgrund seiner Toxizität erschwert. Schliesslich kann Acrylamid infolge seiner Schwerlöslichkeit in unpolaren Lösungsmitteln und Monomeren bei Massepfropfcopolymerisationen oft nur in geringen Mengen eingesetzt werden.

Die aus der DE-OS 2 215 588 bekannten Pfropfpolymerisate können neben den erforderlichen α-Olefinen auch einpolymerisierte Vinyl- oder Allylverbindungen enthalten. In einem Vergleichsbeispiel wird die Herstellung eines Pfropfpolymerisates beschrieben, das anstelle des α-Olefins 1% Allylacetat einpolymerisiert enthält. Über die Pfropfausbeuten und mechanischen Eigenschaften des Produkts werden jedoch keine Angaben gemacht.

Es werden daher pfropfaktive, copolymerisierbare Monomere benötigt, welche Pfropfcopolymerisate mit zufriedenstellenden Eigenschaften ergeben, ohne die genannten Nachteile aufzuweisen. Wie nun gefunden wurde, wird dieses Ziel erreicht durch Verwendung von 0,01–0,5 Gew.-%, bevorzugt 0,05–0,2 Gew.-%, bezogen auf das aufzupfropfende Monomerengemisch, einer Allylverbindung der allgemeinen Formel

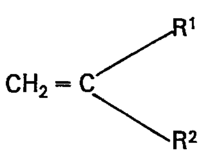

$R^1$ und $R^2$ bedeuten dabei:

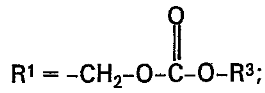 $R^2 = H$; $R^3 = C_1$–$C_8$-Alkyl,

$-CH_2-CH=CH_2$

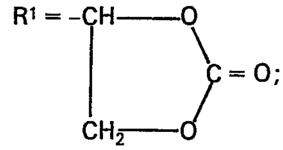 $R^2 = H$;

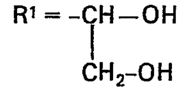 $R^2 = H$;

$R^1 = -CH_2-OH$; $R^2 = H$;

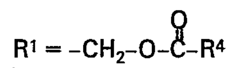 $R^2 = H$; $R^4 = C_1$–$C_8$-Alkyl

$R^1 = R^2 = -CH_2-OH$

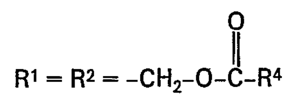 $R^4 = C_1$–$C_8$-Alkyl

Bevorzugt werden Diallylcarbonat, Vinylethylencarbonat, 1-Buten-3,4,-diol, Isobutylendiol und Isobutylendiacetat eingesetzt.

Gegenstand der Erfindung sind somit Pfropfcopolymerisate aus Ethylen-Copolymerisaten und olefinisch ungesättigten Monomeren, dadurch gekennzeichnet, dass sie pfropfpolymerisierte Einheiten von Gemischen aus (Meth) Acrylnitril, einem oder mehreren Monovinylaromaten und einer Allylverbindung auf Ethylen-Vinylester-Copolymerisate enthalten.

Als Pfropfsubstrate werden Ethylen-Vinylester-Copolymere mit 1 bis 75 Gew.-%, vorzugsweise 35 – 50 Gew.-% einpolymerisierten Vinylestern eingesetzt. Als Vinylester werden Ester von Monocarbonsäuren mit 1 bis 10 C-Atomen im Alkylrest, bevorzugt Vinylacetat verwendet.

Die Ethylen-Vinylester-Copolymeren können Mooneyviskositäten ML 4/100°C, gemessen nach DIN 53 523, von 15 – 80, bevorzugt von 20 – 45 haben und Grenzviskositäten [η] von 0,5 bis 1,5 dl/g. Diese Copolymeren sind in Kohlenwasserstoffen und bei höheren Vinylestergehalten auch in Alkoholen löslich.

Als aufzupfropfende Monomere können (Meth)Acrylnitril und Monovinylaromaten wie Styrol, α-Methyl-Styrol und kernsubstituierte Styrole wie Alkylstyrole mit 1 bis 4 C-Atomen im Alkylrest und Halogenstyrole eingesetzt werden.

Bevorzugt werden Acrylnitril, Styrol und eine der oben genannten Allylverbindungen als aufzupfropfende Monomere eingesetzt.

Das eingesetzte Substanzgemisch besteht aus:

A) 10 – 80 Gew.-% Ethylen-Vinylester-, bevorzugt Ethylen-Vinylacetat-Copolymerisat und

B) 90 - 20 Gew.-% aufzupfropfendem Monomerengemisch, bestehend aus:

I) 5 - 50 Gew.-%, vorzugsweise 5 - 30 Gew.-% (Meth)Acrylnitril,

II) 94,99 - 49,5 Gew.-%, vorzugsweise 94,95 - 69,8 Gew.-% eines oder mehrerer Monovinylaromaten und

III) 0,01 - 0,5 Gew.-%, vorzugsweise 0,05 - 0,2 Gew.-% einer Allylverbindung.

Die Summe der Komponenten A) und B) bzw. I - III beträgt 100 Gew.-%.

Die erfindungsgemässen Pfropfpolymerisate bestehen aus

A) 10-80 Gew.-% eines Ethylen-Vinylester-Copolymeren mit einem Gehalt von 1-75 Gew.-% an Vinylestern von Monocarbonsäuren mit 1-10 C-Atomen im Alkylrest und

B) 90-20 Gew.-% eines aufgepfropften Monomerengemisches bestehend aus

I) 5-50 Gew.-% Acrylnitril und/oder Methacrylnitril,

II) 94,99-49,5 Gew.-% eines oder mehrerer Monovinylaromaten und

III) 0,01-0,5 Gew.-% einer Allylverbindung, wobei die Summe der Komponenten A und B sowie I-III jeweils 100 Gew.-% beträgt.

Vorzugsweise bestehen die erfindungsgemässen Pfropfcopolymerisate aus

A) 15-25 Gew.-% eines Ethylen-Vinylester-Copolymeren mit einem Vinylester-Gehalt von 35-50 Gew.-% und

B) 85-75 Gew.-% eines aufgepfropften Monomerengemisches bestehend aus

I) 5-30 Gew.-% Acrylnitril und/oder Methacrylnitril,

II) 94,95-69,8 Gew-% eines oder mehrerer Monovinylaromaten und

III) 0,05-0,2 Gew.-% einer Allylverbindung, wobei die Summe der Komponenten A und B sowie I-III jeweils 100 Gew.-% beträgt.

Die Zusammensetzung der Harzphase entspricht dem eingesetzten Monomergemisch.

Diese Pfropfcopolymerisate haben Grenzviskositätswerte von 0,6 bis 3,0, bevorzugt von 1,0 bis 2,5 dl/g, gemessen in Dimethylformamid bei 25°C.

In diesen Produkten sind die Monomeren weitgehend auf das Substrat gepfropft. Daneben können untergeordnete Mengen an ungepfropftem Copolymerisat und ungepfropftem Substrat vorliegen.

Die Pfropfreaktion kann in homogener und heterogener Phase durchgeführt werden. Soll die Pfropfung in Lösung durchgeführt werden, so richtet sich die Art des Lösungsmittels nach dem Vinylesteranteil des Copolymerisats. Bei Vinylestergehalten <30 Gew.-% sind die bevorzugten Lösungsmittel Aromaten wie Benzol, Toluol und Chlorbenzol. Bei höheren Vinylestergehalten werden Alkohole, bevorzugt tert.-Butanol, als Lösungsmittel verwendet.

Die Pfropfreaktion auf Ethylen-Vinylester-Copolymerisate kann auch in Masse durchgeführt werden. Bei der Massepfropfung wird am günstigsten kontinuierlich verfahren. Dabei müssen mittlere Verweilzeit im Reaktor und Temperatur mit der Zerfallkonstante und Konzentration des Initiators abgestimmt sein, um einen bestimmten Umsatz und ausreichend hohe Molekulargewichte zu erreichen. Dieses Verfahren gewährleistet eine relativ einheitliche chemische Verteilung der Monomeren in der Harzphase.

Die Pfropfcopolymerisation kann durch Bestrahlung oder radikalliefernde Initiatoren ausgelöst werden. Als Polymerisationsinitiatoren eignen sich Azoverbindungen wie Azobisisobuttersäurenitril und insbesondere Perverbindungen wie Isopropylperoxydicarbonat, α-Ethyl-hexylperoxydicarbonat, Cyclohexylperoxydicarbonat, tert.-Butylperpivalat, tert.-Butylperoctoat, tert.-Butylperneodecanoat, Diacetylperoxid, Lauroylperoxid, Succinylperoxid und Dibenzoylperoxid.

Die Initiatorkonzentration beträgt bei der Lösungspolymerisation 0,1 bis 1,0 Gew.-%, bevorzugt 0,3 bis 0,5 Gew.-%, bezogen auf das eingesetzte Monomerengemisch. Die Pfropfpolymerisation wird bei Temperaturen zwischen 40 und 250°C, bevorzugt zwischen 60 und 120°C durchgeführt. Zur Erzielung hoher Molekulargewichte und guter Pfropfausbeuten wird die Pfropfpolymerisation vorzugsweise bei relativ tiefen Temperaturen, beispielsweise bei 60 - 70°C, gestartet und bei Temperaturen zwischen 80 und 100°C zu Ende geführt.

Zur Erzielung besonderer Effekte, z.B. Vernetzung des Ethylen-Copolymerisats, kann die Pfropfreaktion auch in wässrig heterogener Phase durchgeführt werden. Zu diesem Zweck wird die Pfropfpolymerisation vorzugsweise so gestartet, dass eine Lösung aus Ethylen-Vinylester-Copolymerisat in einem Gemisch der oben genannten Monomeren in Gegenwart von 0,01 - 0,5 Gew.-% Peroxiden der oben genannten Art auf eine Reaktionstemperatur von 60 - 90°C erwärmt wird. Nachdem die Polymerisation so weit fortgeschritten ist, dass ein Umsatz von 20 bis 30% erreicht ist, wird durch Hinzufügen eines Gemisches aus Wasser und einer Dispergatorlösung die Pfropfpolymerisation als Perlpolymerisation bei 80 - 100°C zu Ende geführt.

Das Verhältnis der wässrigen zur organischen Phase soll dabei 2 : 1 bis 5 : 1 betragen.

Als Dispergatoren seien Polyvinylalkohol, teilverseiftes Polyvinylacetat, Cellulosederivate wie Methyl- oder β-Hydroxyäthyl-Cellulose, Styrol-Acrylsäure- oder verseifte Styrol-Maleinsäureanhydrid-Copolymerisate, Methacrylsäure-Methylmethacrylat-Copolymere, Polyacrylamid oder Polyacrylsäure beispielhaft erwähnt.

Die Menge der eingesetzten Dispergatoren beträgt 0,01 - 3 Gew.-%, bevorzugt 0,5 - 2 Gew.-%, bezogen auf die eingesetzte organische Phase.

Wird die Massepolymerisation bei 80 - 120°C durchgeführt, dann tritt eine teilweise Vernetzung des Pfropfsubstrates ein. Dies führt zu verbesserten mechanischen Eigenschaften, z.B. höhere Schlagzähigkeit und bessere Verarbeitbarkeit. Der gleiche Effekt kann auch durch Auspolymerisation eines in Masse oder in Lösung hergestellten Pfropfcopolymerisates in einer Polymerisationsschnecke bei 120 - 250°C unter Zugabe von Peroxid erreicht werden.

Bei den beschriebenen Verfahren werden die Monomeren zu 80 bis 100% auf das Substrat aufgepfropft, während ohne Allylverbindung unter den gleichen Bedingungen - je nach verwendetem Pfropfsubstrat - etwa 30 Gew.-% und mehr der eingesetzten Monomeren als freies Copolymerisat vorliegen.

Der Einsatz von Allylverbindungen obengenannter Struktur führt zu Pfropfcopolymerisaten mit gleichmässiger chemischer Verteilung. Beispielhaft sei die Fraktionierung eines Pfropfcopolymerisats (Beispiel 7) mit entmischenden Flüssigkeiten (Dimethylformamid/Methylcyclohexan) angeführt (Tab. 1). Bei dieser Methode erfolgt eine besonders starke Trennung nach der chemischen Zusammensetzung der Polymermoleküle, also auch nach Pfropfastlänge und Pfropfsubstrat-Molekulargewicht (R. Kuhn, Makromolekulare Chem. 177 (1976) 1525). In der Methylcyclohexan-(MCH)-Phase befindet sich ungepfropftes Ethylen-Vinylacetat-Copolymer sowie ein Copolymer mit wenigen oder kurzen Pfropfästen. In der Dimethylformamid-(DMF)-Phase befinden sich ungepfropftes Harz und Pfropfsubstrat mit niedrigem Molekulargewicht.

Die Analysenwerte deuten einerseits auf unterschiedlich gepfropftes Substrat hin, was teilweise durch die breite Molekulargewichtsverteilung des Substrates bedingt ist. Andererseits sind Anteile an ungepfropftem Substrat und freier Harzphase mit Sicherheit sehr niedrig, da durch zusätzliche Fraktionierung keine weitere Auftrennung möglich ist.

Die erfindungsgemäss erhaltenen Produkte eignen sich als Beschichtungsmaterial und thermoplastisch verarbeitbare Kunststoffe. Sie können auf den in der Thermoplast-Technologie üblichen Maschinen problemlos verarbeitet werden.

Extrudierte oder gespritzte Formstücke haben einen Oberflächenglanz, wie er ohne Allylverbindungen als Pfropfaktivatoren nicht erreicht werden kann. Ausserdem wird keine Entmischung der Elastomer- und Harzphase unter Verarbeitungsbedingungen festgestellt.

Tab. 1: Fraktionierung mit entmischenden Flüssigkeiten (DMF/MCH) (Beispiel 7)

| Phase | Gew.-% | N (Gew.-%) | O (Gew-%) | Pfropfausbeute (%) |
|---|---|---|---|---|
| DMF | 35,0 | 6,6 | 2,7 | 84 |
| MCH | 65,0 | 3,8 | 7,0 | |

Beispiel 1

In einem 40 l-Rührautoklaven wurden 1500 g eines Ethylen-Vinylacetat-Copolymeren mit 45 Gew.-% Vinylacetat und einer Mooney-Viskosität von 20 in 15,7 kg tert.-Butanol bei 60°C gelöst und mit $N_2$ begast. Dazu wurde eine Mischung bestehend aus 2250 g Styrol, 750 g Acrylnitril, 6 g Vinylethylencarbonat und 30 g tert.-Butylperpivalat bei 60°C zugegeben und 6 Stunden bei 60°C polymerisiert. Danach wurde die Temperatur auf 80°C erhöht und zwei Lösungen bestehend aus 2250 g Styrol, 1000 ml tert.-Butanol und 40 g tert.-Butylperpivalat sowie 750 g Acrylnitril und 1000 ml tert.-Butanol in 3 Stunden zugepumpt. Anschliessend wurde 6 Stunden bei 80°C auspolymerisiert. Es wurde ein Feststoffgehalt von 28,5 Gew.-% erreicht. Die Aufarbeitung erfolgte durch Ausfällung in heissem Wasser und Trocknen bei 60°C. Man erhielt 7,24 kg eines weissen pulverförmigen Pfropfcopolymerisates.

Beispiel 2

In einem 40 l-Rührautoklaven wurde 1,67 kg eines Ethylen-Vinylacetat-Copolymeren wie in Beispiel 1 in 20 l tert.-Butanol bei 60°C gelöst und mit $N_2$ begast. Danach wurden 1500 g Styrol, 500 g Acrylnitril, 4 g Vinylethylencarbonat und 5 g tert.-Butylperpivalat zugegeben. Anschliessend wurde eine Lösung bestehend aus 800 ml tert.-Butanol, 60 g Styrol und 20 g tert.-Butylperpivalat in 3 Stunden bei 60°C zugepumpt und 5 Stunden polymerisiert. Nachdem die Temperatur auf 80°C erhöht worden war, wurden zwei Lösungen bestehend aus 3060 g Styrol, 1000 ml tert.-Butanol und 40 g tert.-Butylperpivalat sowie 1120 g Acrylnitril und 1000 ml tert.-Butanol in 5 Stunden bei 80°C zugepumpt und 4 Stunden bis zu einem Feststoffgehalt von 29,2% auspolymerisiert. Die Aufarbeitung erfolgte wie in Beispiel 1. Man erhielt 7,5 kg Pfropfcopolymerisat.

Beispiel 3

In einem 130 l-Rührautoklaven wurden 5 kg eines Ethylen-Vinylacetat-Copolymeren nach den Beispielen 1 und 2 in 60 l tert.-Butanol bei 60°C gelöst und mit $N_2$ begast. Dazu wurden 4500 g Styrol, 1500 g Acrylnitril, 12 g Vinylethylencarbonat und 8 g tert.-Butylperpivalat gegeben. Anschliessend wurden 800 ml tert.-Butanol, 60 g tert.-Butylperpivalat und 100 g Styrol in 3 Stunden bei 60°C zugepumpt und 5 Stunden nachpolymerisiert. Nach Temperaturerhöhung auf 80°C wurden 9200 g Styrol und 3340 g Acrylnitril sowie 130 g tert.-Butylperpivalat in 2000 ml tert.-Butanol in 6 Stunden zugepumpt und in 6 Stunden bis zu einem Feststoffgehalt von 30,5 Gew.-% auspolymerisiert. Die Aufarbeitung erfolgte durch Schneckenausdampfung. Man erhielt 18,6 kg Pfropfcopolymerisat in Form eines weissen, glänzenden Granulates.

Beispiel 4

Es wurde wie in Beispiel 2 verfahren, mit dem Unterschied, dass anstelle von Vinylethylencarbonat 2 g Diallylcarbonat eingesetzt wurden. Man erhielt 7,2 kg eines weissen Pfropfcopolymerisates.

Beispiel 5

Durchführung wie in den Beispielen 2 und 4 mit 8 g Diallylcarbonat. Man erhielt 7,2 g Pfropfcopolymerisat.

Beispiel 6

In einem 130 l-Rührautoklaven wurden 5 kg eines Ethylen-Vinylacetat-Copolymeren nach Beispiel 1 in 60 l tert.-Butanol bei 60°C gelöst und mit $N_2$begast. Dazu wurden 9800 g Styrol, 3300 g Acrylnitril, 14 g Vinylethylencarbonat und 14 g Diallylcarbonat gegeben. Dann wurden 100 g tert.-Butylperpivalat gelöst in 1000 ml tert.-Butanol und 50 ml Toluol in 2 Stunden bei 60°C zugepumpt und 5 Stunden polymerisiert. Nach Temperaturerhöhung auf 80°C wurden 4000 g Styrol und 1500 g Acrylnitril sowie 80 g tert.-Butylpervivalat in 2000 ml tert.-Butanol und 500 g Styrol in 2 Stunden bei 80°C zugepumpt und 6 Stunden bis zu einem Feststoffgehalt von 34 Gew.-% auspolymerisiert. Die Aufarbeitung erfolgte wie in Beispiel 1. Man erhielt 22 kg weisses Pfropfcopolymerisat.

Beispiel 7

Durchführung wie in Beispiel 6. Als Allylverbindung wurden 9 g Isobutylendiol eingesetzt. Man erhielt 22,5 kg weisses Pfropfcopolymerisat.

In Tabelle 2 sind die Prüfergebnisse der in den Beispielen 1–7 dargestellten Pfropfcopolymerisate zusammengestellt. Die Messungen wurden nach folgenden Normen durchgeführt:

Schlagzähigkeit $a_n$ nach DIN 53 453

Kerbschlagzähigkeit $a_k$ nach DIN 53 453

Kugeldruckhärte $H_k$ nach 30 sec. nach DIN 53 456

Biege-E-Modul nach DIN 53 457

Vicat-Temp., Meth. B. nach DIN 53 460

Tabelle 2: Mechanische Eigenschaften der in den Beispielen 1–7 dargestellten Pfropfcopolymerisate

| Beispiel Nr. | Ethylen-Vinylacetat-Copolymer im Pfropfcopolymerisat (Gew.-%) | Allylverb. | Gew.-%[1] | [η][2] [dl/g] | [3] $a_n$ [kJ/m²] | [3] $a_k$ [kJ/m²] | Biege-E-Modul [N/mm²] | Vicat B [°C] | $H_k$ [N/mm²] |
|---|---|---|---|---|---|---|---|---|---|
| 1 | 21,0 | VEC[4] | 0,1 | 0,87 | ungebr. | 4 | 2090 | 97 | 82 |
| 2 | 22,3 | VEC | 0,06 | 1,01 | ungebr. | 9 | 2060 | 95 | 71 |
| 3 | 22,6 | VEC | 0,07 | 0,89 | ungebr. | 7 | 2010 | 91 | 69 |
| 4 | 23,4 | DAC[5] | 0,03 | 0,89 | ungebr. | 4 | 2080 | 93 | 73 |
| 5 | 23,4 | DAC | 0,12 | 1,05 | ungebr. | 4 | 2120 | 94 | 76 |
| 6 | 22,8 | VEC/DAC | 0,07/0,07 | 1,22 | ungebr. | 8 | 1460 | 76 | 62 |
| 7 | 22,0 | IBD[6] | 0,1 | 1,52 | 75 | 4 | 1980 | 98 | 87 |

[1] Bezogen auf eingesetzte Monomere
[2] Gemessen in DMF bei 25°C
[3] Gemessen bei 25°C
[4] Vinylethylencarbonat
[5] Diallylcarbonat
[6] Isobutylendiol

**Patentansprüche**

1. Pfropfpolymerisate bestehend aus

A) 10–80 Gew.-% eines Ethylen-Vinylester-Copolymeren mit einem Gehalt von 1–75 Gew.-% an Vinylestern von Monocarbonsäuren mit 1–10 C-Atomen im Alkylrest und

B) 90–20 Gew.-% eines aufgepfropften Monomerengemisches bestehend aus

I) 5–50 Gew.-% Acrylnitril und/oder Methacrylnitril,

II) 94,99–49,5 Gew.-% eines oder mehrerer Monovinylaromaten und

III) 0,01–0,5 Gew.-% einer Allylverbindung, wobei die Summe der Komponenten A und B sowie I–III jeweils 100 Gew.-% beträgt.

2. Pfropfcopolymerisate nach Anspruch 1 bestehend aus

A) 15–25 Gew.-% eines Ethylen-Vinylester-Copolymeren mit einem Vinylester-Gehalt von 35–50 Gew.-% und

B) 85–75 Gew.-% eines aufgepfropften Monomerengemisches bestehend aus

I) 5–30 Gew.-% Acrylnitril und/oder Methacrylnitril,

II) 94,95–69,8 Gew.-% eines oder mehrer Monovinylaromaten und

III) 0,05–0,2 Gew.-% einer Allylverbindung, wobei die Summe der Komponenten A und B sowie I–III jeweils 100 Gew.-% beträgt.

3. Pfropfpolymerisate nach Anspruch 2, dadurch gekennzeichnet, dass sie als Vinylester Vinylacetat und als aufgepfropfte Monomere Acrylnitril, Styrol und eine Allylverbindung enthalten.

4. Verfahren zur Herstellung von Pfropfpolymerisaten nach Anspruch 1, dadurch gekennzeichnet, dass 20–90 Gew.-% eines Monomerengemisches aus

I) 5–50 Gew.-% Acrylnitril und/oder Methacrylnitril,

II) 94,99–49,5 Gew.-% eines oder mehrerer Monovinylaromaten und

III) 0,01–0,5 Gew.-% einer Allylverbindung

in Gegenwart von 10-80 Gew.-% eines Ethylen-Vinylester-Copolymeren mit einem Vinylester-Gehalt von 1-75 Gew.-% und eines Radikalbildners polymerisiert werden.

5. Verfahren nach Anspruch 4, dadurch gekennzeichnet, dass als Allylverbindung Diallylcarbonat, Vinylethylencarbonat, 1-Buten-3,4-diol, Isobutylendiol oder Isobutylendiacetat eingesetzt werden.

**Claims**

1. Graft polymers consisting of

A) 10-80% by weight of an ethylene/vinyl ester copolymer containing 1-75% by weight of vinyl esters of monocarboxylic acids with 1-10 carbon atoms in the alkyl radical and

B) 90-20 % by weight of a grafted-on monomer mixture consisting of

I) 5-50% by weight of acrylonitrile and/or methacrylonitrile,

II) 94.99-49.5% by weight of one or more aromatic monovinyl compounds and

III) 0.01-0.5% by weight of an allyl compound, the sum of components A and B and I-III in each case being 100% by weight.

2. Graft copolymers according to claim 1 consisting of

A) 15-25% by weight of an ethylene/vinyl ester copolymer containing 35-50% by weight of vinyl ester and

B) 85-75% by weight of a grafted-on monomer mixture consisting of

I) 5-30% by weight of acrylonitrile and/or methacrylonitrile,

II) 94.95-69.8% by weight of one or more aromatic monovinyl compounds and

III) 0.05-0.2% by weight of an allyl compound, the sum of components A and B and I-III being in each case 100% by weight.

3. Graft polymers according to claim 2, characterised in that they contain vinyl acetate as the vinyl ester and acrylonitrile, styrene and an allyl compound as grafted-on monomers.

4. Process for producing graft polymers according to claim 1, characterised in that 20-90% by weight of a monomer mixture of

I) 5-50% by weight of acrylonitrile and/or methacrylonitrile,

II) 94.99-49.5% by weight of one or more aromatic monovinyl compounds and

III) 0.01-0.5% by weight of an allyl compound are polymerised in the presence of 10-80% by weight of an ethylene/vinyl ester copolymer containing 1-75% by weight of vinyl ester, and a radical former.

5. Process according to claim 4, characterised in that diallyl carbonate, vinyl ethylene carbonate, 1-butene-3,4-diol, isobutylene diol or isobutylene diacetate are used as the allyl compound.

**Revendications**

1. Des polymérisats greffés formés de:

A) 10 à 80% en poids d'un copolymère éthylène-ester vinylique ayant une teneur de 1-75% en poids d'esters vinyliques d'acides monocarboxyliques ayant 1-10 atomes de carbone dans le reste alkyle, et

B) 90-20 % en poids d'un mélange monomérique fixé par greffe, composé de

I) 5 à 50 % en poids d'acrylonitrile et/ou de méthacrylonitrile,

II) 94,99-49,5 % en poids d'un ou plusieurs composés aromatiques monovinyliques, et

III) 0,01-0,5 % en poids d'un composé allylique, la somme des composants A) et B) ainsi que des composants I-III s'élevant toujours à 100 % en poids.

2. Des copolymérisats greffés suivant la revendication 1, formés de

A) 15-25 % en poids d'un copolymère éthylène-ester vinylique ayant une teneur en ester vinylique de 35-50 % en poids, et

B) 85-75 % en poids d'un mélange monomérique fixé par greffe, composé de

I) 5-30 % en poids d'acrylonitrile et/ou de méthacrylonitrile,

II) 94,95-69,8 % en poids d'un ou plusieurs composés aromatiques monovinyliques, et

III) 0,05-0,2 % en poids d'un composé allylique, la somme des composants (A) et (B) ainsi que des composants I-III s'élevant dans chaque cas à 100 % en poids.

3. Polymérisats greffés suivant la revendication 2, caractérisés en ce qu'ils contiennent de l'acétate de vinyle comme ester vinylique et de l'acrylonitrile, du styrène et un composé allylique comme monomères fixés par greffe.

4. Procédé de production de polymérisats greffés suivant la revendication 1, caractérisé en ce qu'on polymérise 20-90 % en poids d'un mélange de monomères comprenant:

I) 5-50 % en poids d'acrylonitrile et/ou de méthacrylonitrile,

II) 94,99-49,5 % en poids d'un ou plusieurs composés aromatiques monovinyliques et

III) 0,01-0,5 % en poids d'un composé allylique, en présence de 10-80 % en poids d'un copolymère éthylène-ester de vinyle ayant une teneur en ester de vinyle de 1-75 % en poids, et d'un générateur de radicaux.

5. Procédé suivant la revendication 4, caractérisé en ce qu'on utilise, comme composé allylique, le carbonate de diallyle, le carbonate de vinyléthylène, le 1-butène-3,4-diol, l'isobutylènediol ou le diacétate d'isobutylène.